# EUROPEAN PATENT SPECIFICATION

(11) **EP 3 708 638 B1**
(45) Date of publication and mention of the grant of the patent: **26.06.2024**
(21) Application number: 20161890.7
(22) Date of filing: 09.03.2020
(51) Int. Cl.: C10L 9/00, C10L 9/02, C10L 9/08, C10L 5/36, C10L 5/44

(54) **METHOD FOR THE DESALINATION OF LIGNOCELLULOSIC BIOMASSES**
VERFAHREN ZUR ENTSALZUNG VON LIGNOCELLULOSISCHEN BIOMASSEN
PROCÉDÉ DE DESSALEMENT DE BIOMASSES LIGNOCELLULOSIQUES

(30) Priority: 11.03.2019 IT 201900003455
(43) Date of publication of application: 16.09.2020
(73) Proprietor: Water And Soil Remediation S.r.l., 46010 Curtatone, Frazione Levata MN (IT)
(72) Inventor: PRANDI, Alberto, 46100 Mantova (IT)
(74) Representative: Modiano, Micaela Nadia

(56) References cited:
- WO-A1-2017/115262
- KR-A- 20170 114 465
- US-A- 4 582 512
- US-A1- 2010 203 605
- US-A1- 2012 116 063
- US-A1- 2013 244 290

## Description

The present invention relates to a method for the desalination treatment of lignocellulosic biomasses, particularly for facilitating the combustion thereof, and for the recovery of salts that can be used as natural fertilizers.

Lignocellulosic biomasses constitute an increasingly important alternative to fossil fuels, because they are renewable energy sources that can reduce the carbon dioxide (CO₂) emissions that are responsible for global warming.

In fact, in Europe and throughout the world their recovery and use as fuel in furnaces, in boilers and even in domestic heating stoves, in the form of wood, chips and pellets, is steadily increasing.

Unfortunately their combustion has drawbacks with respect to fossil fuels like methane gas, LPG or Diesel fuel, i.e. the formation of ash which often needs to be disposed of, encrustations that are corrosive and which inhibit the exchange of heat in the combustion chamber, incomplete combustion, and the emission of particulates and vapors that are harmful to health.

More precisely, the formation of ash at the base of the combustion chamber has its origin in the content of mineral salts of calcium, magnesium, sodium, potassium, silicon, chlorine, nitrogen, phosphor and others, which are contained in wood and in other lignocellulosic biomasses in percentages that vary from 0.5% by weight up to a few percentage points, reaching 10% by weight and more in straw and other biofuels. For example, in wheat straw, barley straw and oat straw, the ash is contained in the range of from 2 to 10% by weight, in rice straw from 10 to 15% by weight, in maize stalks from 2 to 7% by weight, in vine shoots from 2 to 5% by weight, in olive trimmings from 1.5 to 2% by weight, in fruit tree trimmings from 10 to 12% by weight, in forestry residues from 0.3 to 2.5% by weight. All these forms of ash derive from mineral salts containing the various metals cited above, in varying proportions. In the process of combustion, this saline content is converted to oxygenated salts, oxides and carbonates, and forms a dust that is generally referred to as ash. Part of this ash is deposited at the base of the combustion chamber, part on the metallic heat exchange surfaces, and a significant part is carried on the fumes in the form of fine dust. The latter contributes to what is known as "fine particulate", which is normally measured in the atmosphere as PM10 and PM2.5 (particles having a diameter smaller than 10 microns and 2.5 microns respectively). Furthermore, salts of nitrogen, phosphor, sulfur and chlorine, which plants absorb from the soil for their vegetative development, are converted during combustion to nitrogen oxide, phosphor oxide, sulfur oxide and hydrochloric acid, vapors and aerosols that heavily pollute the atmosphere and are responsible for serious damage to human health and to cultural and architectural heritage in general.

Obviously, atmospheric emissions of the above mentioned pollutants are directly proportional to the concentrations of the various mineral salts contained in the biofuels. For example, for an overall average saline content in the order of 1% by weight, nitrogen is present in the order of one half of a percentage point by weight, while chlorine and sulfur are in the order of one hundred to one thousand parts per million. While big biomass-fueled boilers are normally equipped with systems for treating and filtering the fumes, and can thus abate some of the particulate and the combustion vapors, this is not possible with small boilers and stoves for domestic heating, which for economic reasons are not fitted with such systems. Furthermore the latter, for reasons of compactness, can be affected by incomplete combustion of the biomass, particularly with regard to the crystalline ligninic components, and so there may be residual unburned aromatic molecules (for example PAHs, polycyclic aromatic hydrocarbons) and unburned carbonaceous particles, which exit from the combustion chamber. These particles are responsible for the blackish coloring of the filters used to measure PM10 and PM2.5 in the atmosphere.

In recent years a growing number of boilers and stoves that are fueled by biomass (which by definition is renewable) has replaced the ones that run on fossil fuels (methane, LPG, Diesel fuel), thus reducing the overall emissions of CO₂, but against this producing increases in fine dusts and other pollutants in the atmosphere; for example, calculations by the ENEA-ISPRA show that in recent years the emissions of fine dusts in Italy deriving from domestic heating have doubled, going from 60 to 120 Kt/year, precisely as a result of the current program of fuel conversion. Considering the worldwide tendency toward greater use of biofuels, this problem may get worse.

Some geographic areas are characterized by intense anthropization associated with the simultaneous consumption of biofuels, and in addition they experience thermal inversions and low rates of atmospheric turnover, especially in the winter months, so that the various pollutants accumulate in rising concentrations: this is the case of Po Plain in Italy, where tens of millions of people are exposed to a significant health risk.

A further problem linked to the combustion of biomass is impoverishment of the soils from which that biomass originates, owing to the failure to return thereto the mineral salts that the plants have absorbed for their growth. Except for rare and recent cases where ash is beginning to be incorporated into organic residues in order to obtain alternative fertilizers to synthetics, today we are witnessing a generalized loss of fertility of soils, caused to a great extent by the lack of return fertilization thereof.

Today 100% of the biofuel present on the market, represented by wood, chips and pellets, come from lignocellulosic biomasses that have not been subjected to any desalination treatment, so much that the quality classifications are based on a careful selection of the biomasses of origin, made on the basis of the ash content of the lignocellulose of origin; as is known, wood classed as "firewood" and wood chips undergo a simple drying process until they reach humidity values that are typically allowed by the market, which are about 20% by weight of water for firewood and about 35% by weight of water for wood chips. Pellets on the other hand are obtained by milling desiccated wood, adding a binder material and compressing with subsequent extrusion, and they are normally sold with a residual humidity of up to 10% by weight.

US2010/203605A discloses a method and apparatus for fractionating a lignocellulose-based biomass.

KR20170114465 relates to demineralized biomass, a complex fuel production system using the same, and a method for producing the same.

US2013244290A1 discloses processes and apparatus to convert biomass, including wood and agricultural residues, into low-ash biomass pellets for combustion, alone or in combination with another solid fuel.

US2012116063A1 discloses a method comprising: (a) providing a lignocellulosic substrate; (b) contacting said lignocellulosic substrate with an extractant comprising a water-soluble organic solvent to form an extracted substrate and a miscella; (c) removing miscella from said extracted substrate; and (d) hydrolyzing said extracted substrate using a chemically catalyzed process.

The desalination of lignocellulosic biomasses is not an easy process, because the mineral salts are incorporated into the structural cells of the plants as they grow and it is therefore necessary to break down these stratified wall structures and consequently disaggregate the fibers so that the salts become accessible to the solvent. Moreover, adding water to the biomass, which is necessary to break down the plant structure and solubilize the saline content, would be in direct contrast with the methods currently in use, all of which aim to desiccate the biofuel before it is consumed.

In conclusion, by way of the methods currently in use, biofuels cannot be desalinized and the environmental and health problems indicated above will inexorably increase as a consequence of the increase in use of biofuels.

The aim of the present invention is to eliminate the above mentioned drawbacks in the use of biofuels, by providing a method that allows to obtain a biofuel that produces a reduced quantity of ash when it burns, and with reduced emissions of fine dusts into the environment.

Another object of the present invention is to provide a method that makes it possible to recover the salts present in lignocellulosic biomasses and use them as natural fertilizers.

Another object of the invention is to provide a method whose heat requirements can be met by common heat sources, such as district heating or hot fluids originating from other processes.

This aim and these and other objects which will become better apparent hereinafter are achieved by a method for the desalination treatment of a lignocellulosic biomass which comprises the steps of subjecting a milled lignocellulosic biomass to:
a) a washing step using an aqueous solution having a pH comprised between 8 and 11.5, preferably between 8.5 and 11, at a temperature comprised between 15°C and 90°C, at a pressure comprised between 1 and 15 bars, preferably between 1 and 8 bars, and for a contact time comprised between 1 and 50 minutes;
b) a washing step using an aqueous solution having a pH comprised between 3 and 6, preferably between 4.5 and 5.5, at a temperature comprised between 20°C and 100°C, preferably between 40°C and 60°C, at a pressure comprised between 1 and 15 bars, preferably between 1 and 8 bars, and for a contact time comprised between 1 and 100 minutes, preferably between 3 and 30 minutes; and
wherein said washing step b) precedes said washing step a)..

The aim of the present invention is also achieved by a desalinated lignocellulosic biomass obtainable by the method of the invention comprising, on the dry residue:
- up to 2000 ppm of ash, as measured according to the UNI EN ISO 18122:2016 standard;
- up to 100 ppm of nitrogen, as measured according to the UNI EN ISO 16948:2015 standard;
- up to 50 ppm of sulfur, as measured according to the UNI EN ISO 16994:2017 standard; and
- up to 50 ppm of chlorine, as measured according to the UNI EN ISO 16994:2017 standard.

The aim of the present invention is also achieved by the use as a biofuel of the aforementioned desalinated lignocellulosic biomass.

Further characteristics and advantages of the invention will become better apparent from the detailed description that follows.

In a first aspect, the present invention relates to a method for the desalination treatment of a lignocellulosic biomass which comprises the steps of subjecting a milled lignocellulosic biomass to:
a) a washing step using an aqueous solution with a pH comprised between 8 and 11.5, preferably between 8.5 and 11, at a temperature comprised between 15°C and 90°C, a pressure comprised between 1 and 15 bars, preferably between 1 and 8 bars, and a contact time comprised between 1 and 50 minutes;
b) a washing step using an aqueous solution with a pH comprised between 3 and 6, preferably between 4.5 and 5.5, at a temperature comprised between 20°C and 100°C, preferably between 40°C and 60°C, a pressure comprised between 1 and 15 bars, preferably between 1 and 8 bars, and a contact time comprised between 1 and 100 minutes, preferably between 3 and 30 minutes; and
wherein said washing step b) precedes said washing step a).

According to embodiments described below, the method of the invention makes it possible to provide a continuous processing of lignocellulosic biomass with a series of consecutive treatments that are adapted to maximize the efficiency of the washing steps a) and b) described above.

In particular, in order to render the salts present in the lignocellulosic biomass accessible to the action of the solvents used in the washing steps a) and b), it is preferable to execute a destructuring pretreatment aimed at breaking down the lignin enclosure.

Furthermore, lignocellulosic biomass is filled with air in its interstitial volumes, including the volumes enclosed by ligninic containers. This air can impede or even prevent the entry of water into interstitial volumes. Therefore, in a preferred embodiment of the method of the present invention, before adding the necessary quantity of water to the milled biomass, the air is extracted from the lignocellulosic biomass, preferably by applying a vacuum. This process of extracting the air from the biomass favors a more effective migration of water into the ligninic cells, and results in a greater efficiency of the method of the invention. More specifically, such extraction of air occurs by aspiration, which is achieved by way of a system for applying a vacuum, for example constituted by a liquid ring compressor, which makes it possible to extract the air from the interstices of the biomass.

In a first particularly preferred embodiment, the method of desalinization according to the invention comprises, before the washing steps a) and b), the further steps of:
i) milling the lignocellulosic biomass;
ii) extracting the air from the milled lignocellulosic biomass;
iii) adding water to the lignocellulosic biomass from which the air has been extracted, obtaining a water:lignocellulosic biomass mixture with a water:lignocellulosic biomass ratio lower than 2:1 by weight, preferably lower than 1:1 by weight, the water being preferably preheated to a temperature lower than 120°C;
iv) heating and keeping the water:lignocellulosic biomass mixture at a temperature comprised between 80 and 160°C, preferably between 80 and 135°C; and
v) vaporizing the heated mixture comprising water and lignocellulosic biomass at an absolute pressure comprised between 0.5 and 25 kPa.

Milling of lignocellulosic biomass can be carried out using a blade mill or a hammer mill, while the size of the fragments can be measured optically, via a count of a representative sample using a graduated glass container, optionally with the aid of a magnifying lens.

The size distribution of the particles is measured by sieving the sample on vibrating screens with holes of progressively decreasing diameter and arranged vertically in series, for example in conformance with the UNI EN 14961:2010 standard. In this manner the finer particles pass through the screens with large holes until they are stopped at the screen that is sufficiently fine to retain them. The pretreatment method that is currently most widely used to break down the lignin enclosure of lignocellulosic biomasses uses steam explosions, with or without the addition of acids or other chemical compounds, and consists of forcing the lignin structure of the biomass to rupture with a sudden expansion of steam injected especially into the biomass.

With respect to the steam explosion process, where it is the steam (and only partly the water) that expands from the initial pressure to the atmospheric pressure, the method according to the first particularly preferred embodiment described above entails an expansion of greater proportions, induced by the phase transition from liquid to steam of the water contained and introduced into the biomass.

More precisely, instead of injecting steam into the biomass, a preset quantity of water in the liquid state, preferably heated, is added to the dry substance in order to obtain a certain concentration, preferably with methods that favor its penetration into the ligninic enclosure. In particular, the water is added in a quantity corresponding to a ratio of water to lignocellulosic biomass of less than 2:1 by weight, preferably less than 1:1.

The mixture is kept under pressure and simultaneously heated until temperatures comprised between 80°C and 160°C are reached, preferably between 80°C and 135°C, before proceeding with the vaporization or "flashing".

The flashing occurs in a chamber in which the pressure is lower than the atmospheric pressure, where the water contained in the mixture vaporizes (step v.), expands and shatters the ligninic structures, resulting in a destructured biomass.

In this manner, after the destructuring of the plant fibers with rupture of the ligninic walls responsible for the confinement of cellulosic fibers, hemicellulosic fibers and a high proportion of mineral salts, the latter are exposed to the solvent action of the water in a first washing step (corresponding to the washing step b) in the process of the invention according to its broadest embodiment), in which a slightly acidic aqueous solution is used and which results in the solubilization of all salts (except for some which are compounds of silicon): alkaline/earth metals, alkalines, typically fertilizing elements like N, P, K, S, and other trace minerals. It is known in fact that all the metals cited above are soluble in a slightly acidic aqueous environment, for example like acetates if the acidifier is acetic acid, and chlorides if the acidifier is hydrochloric acid. Therefore the present invention adopts very mild concentrations, indicated below, which are sufficient to solubilize inorganic compounds but are not sufficient to solubilize hemicellulosic and other organic components of biomasses. The silica component, which represents an important proportion of all the salts present, given the abundance of this element on the Earth and in the various environmental spheres, is only partially dissolved, however.

The method according to the invention therefore entails a second washing step (corresponding to the washing step a) , in which a slightly alkaline aqueous solution is used, optionally additivated with a complexing compound, in order to complete the solubilization of the remaining silica portions, which are constituted mainly by silicic acid, polymers thereof and amorphous silica. The complexing compounds, if present, can be selected from the group consisting of EDTA (ethylenediaminetetraacetic acid), salts of citric acid and salts of oxalic acid, and are used in quantities of the order of magnitude of parts per million. The washing step a) is performed in very mild conditions in that it is aimed at selectively dissolving the silica, taking care not to undermine the lignin or other organic components of the biomass; in particular, consumption of the basic substance is very limited because the objective is to solubilize exclusively the inorganic component contained in the lignocellulose.

Advantageously, with respect to the steam explosion, the destructuring method described above in steps i-v) uses heat levels that are much lower (at most 160°C, compared to the 180-240°C of the steam explosion), thus making it possible to take best advantage of the enthalpies of the flows in output from the process.

In a preferred embodiment of the method of desalinization according to the first particularly preferred embodiment, the water added to the biomass in step iii) is preheated to a temperature lower than 120°C.

The subsequent desalinization of the biomass that has been destructured via the washing steps a) and b) can employ one of the conventional techniques of washing by solid/liquid contact, for example in vertical percolation columns, with an ascending path for the biomass and a descending path for the washing solution or vice versa, in a filter press provided with backwashing or in a centrifuge provided with counter-current washing.

In an embodiment, the method for the desalination treatment of a lignocellulosic biomass according to the first particularly preferred embodiment described above is characterized in that in the above mentioned second washing (corresponding to the washing step a) the alkaline aqueous solution has a temperature comprised between 20°C and 90°C, preferably between 30°C and 60°C, and the contact time of the biomass with the aqueous solution is comprised between 1 and 40 minutes, preferably between 2 and 20 minutes.

In this first particularly preferred embodiment, a first washing is therefore carried out, preferably by vertical percolation against the current, with slightly acidic hot water, followed by a second washing, preferably by vertical percolation against the current, with slightly alkaline hot water and optionally additivated with a complexing compound, followed by an optional operation of compression (pressing) of the lignocellulosic biomass in output from the second washing, with draining of the residual impregnation water.

This operation of pressing and draining makes it possible to reduce the water content of the biomass from over 50% by weight, before the pressing, to about 30% by weight, after the pressing. In this way the saline fractions, dissolved in the impregnation water, are separated from the biomass and this simplifies the subsequent step of desiccation, which is necessary in order to obtain the above mentioned levels of residual humidity of the lignocellulosic biomass typically admitted to the market.

According to the invention, the aforementioned aqueous solution of the washing step a) can be an ammonia solution at a concentration comprised between 0.01M and 0.1M.

In an embodiment, the method for the desalination treatment according to the invention is characterized in that in the washing step b) the aqueous solution is selected from the group constituted by a solution of acetic acid at a concentration comprised between 10⁻⁶ and 10⁻¹ M and a solution of hydrochloric acid at a concentration comprised between 10⁻⁶ and 10⁻² M. In any case, since the present invention aims at the solubilization of only the mineral salts, avoiding the dissolving of organic components, the use of acidic and basic compounds is limited to very diluted concentrations and the temperatures employed are very mild.

The desalinated biomass obtained by way of the method of the invention according to any embodiment thereof can then be subjected to further steps of dehydration and densification by way of techniques commonly employed in the production of solid biofuels, for example pellets.

The method for the desalination treatment of a lignocellulosic biomass according to the various embodiments described above can further comprise the steps of:
i) separating the desalinated lignocellulosic biomass from the aqueous solutions that are the result of the washing steps a) and b);
ii) desiccating the desalinated lignocellulosic biomass obtained in step i) until a humidity rate of less than 10% by weight is obtained; and
iii) pressing the desiccated lignocellulosic biomass obtained in step ii) to form pellets.

In an embodiment, the pellets thus obtained are cooled by way of ventilation with air at ambient temperature.

After separation from the desalinated lignocellulosic biomass, the washing waters resulting from the washing steps a) and b) can be used, separately or in combination, as liquid fertilizer, or they can be subjected to further treatments aimed at separating the salts from the water by way of one of the conventional techniques, such as for example separation with semipermeable membranes or multi-stage evaporation. In this manner the water can be recycled in the process of desalinating the lignocellulosic biomasses, while the salts, once desiccated, can be used as solid fertilizer for agricultural use, preferably in granular form. The fertilizer thus obtained contains not only mineral salts, but also a proportion of natural organic substances, comprising a proportion of partially-hydrolyzed hemicellulose, which pass into the aqueous solutions under the conditions applied: the result is a complex N/P/K/Si/trace minerals/organic fertilizer, completely natural and therefore with the ideal formulation for restoring soils with what plants have removed with their root apparatus.

In an embodiment, the method for the desalination treatment of a lignocellulosic biomass according to the invention therefore comprises the further steps of:
- separating and recycling the water from the aqueous solutions that are the result of the washing steps a) and b), obtaining a solid residue; and
- desiccating and subjecting the solid residue to granulation.

The method according to the invention makes it possible to obtain a desalinated biomass with a saline content, measurable as % of ash, that is lower than 0.2% by weight on the weight of the pellets, i.e. less than one third of A1 quality (defined on the basis of the European UNI EN 14961-5:2011 standard) of the pellets on the market which, after combustion, have a residue in the ash of up to 0.7% by weight with respect to the weight of the pellets.

In a second aspect, the present invention relates to a desalinated lignocellulosic biomass obtainable by the method of the invention comprising, on the dry residue:
- up to 2000 ppm of ash, as measured according to the UNI EN ISO 18122:2016 standard;
- up to 100 ppm of nitrogen, as measured according to the UNI EN ISO 16948:2015 standard;
- up to 50 ppm of sulfur, as measured according to the UNI EN ISO 16994:2017 standard; and
- up to 50 ppm of chlorine, as measured according to the UNI EN ISO 16994:2017 standard.

In a third aspect, the present invention relates to the use as biofuel of a desalinated lignocellulosic biomass described in the second aspect of the invention.

In a fourth aspect not according to the claimed invention, the present disclosure relates finally to the use of the aqueous solutions that are the result of the washing steps a) and b), or of the solid residue thereof after desiccation and granulation, as a fertilizer.

The present invention therefore makes it possible to obtain a series of important advantages with respect to the known art:
- elimination of the salts directly from lignocellulosic biomasses before use as biofuel in boilers/stoves, with a consequent abatement of the accumulation of ash and of encrustations in combustion chambers and, especially, of emissions of PM10, PM2.5, NOₓ, SO₂, HCl and other acidic and harmful vapors, to the benefit of the environment, health and costs to society;
- facilitation of combustion, extended to all components of biofuels, including carbonaceous complexes which are normally resistant to complete oxidation, with consequent abatement of atmospheric emissions of carbonaceous particles and polycyclic aromatic hydrocarbons, to the benefit of health and costs to the community;
- recovery as natural fertilizer of the saline/organic content of the lignocellulosic biomasses, which makes it possible to compensate both the saline content of the soils as full equilibrium of the salts absorbed by cultivation, and the organic carbon also absorbed by cultivation, all to the benefit of recuperation of soil fertility;
- a limited enthalpy requirement and an especially limited thermal level of the necessary heat, such as to make it easy and convenient to associate the method with any production side characterized by heat waste that is unrecoverable and therefore dispersed into the environment, for example into cooling waters and/or into the air;
- a minimal (negligible) impoverishment of the organic component of the desalinated biomass, as a consequence of the mild washing conditions, mild that is in terms of both concentrations and temperatures, resulting in differentiated solubilization, for inorganic substances only;
- the possibility of enhancing ecocompatible biofuels with biomass, which as is known is rich in ash, like rice straw, fruit tree trimmings, brushwood from verges and waterway banks, tree barks, and residues from various processes.

## Claims

1. A method for the desalination treatment of a lignocellulosic biomass which comprises the steps of subjecting a milled lignocellulosic biomass to:
a) a washing step using an aqueous solution with a pH comprised between 8 and 11.5, preferably between 8.5 and 11, at a temperature comprised between 15°C and 90°C, a pressure comprised between 1 and 15 bars, preferably between 1 and 8 bars, and a contact time comprised between 1 and 50 minutes;
b) a washing step using an aqueous solution with a pH comprised between 3 and 6, preferably between 4.5 and 5.5, at a temperature comprised between 20° and 100°C, preferably between 40 and 60°C, a pressure comprised between 1 and 15 bars, preferably between 1 and 8 bars, and a contact time comprised between 1 and 100 minutes, preferably between 3 and 30 minutes; and
wherein said washing step b) precedes said washing step a).

2. The method according to claim 1, **characterized in that** it comprises, before the washing steps a) and b), the further steps of:
i) milling the lignocellulosic biomass;
ii) extracting the air from the milled lignocellulosic biomass;
iii) adding water to the lignocellulosic biomass from which the air has been extracted, obtaining a water:lignocellulosic biomass mixture with a water:lignocellulosic biomass ratio lower than 2:1 by weight, preferably lower than 1:1 by weight, said water being preferably preheated to a temperature lower than 120°C;
iv) heating and keeping the water:lignocellulosic biomass mixture at a temperature comprised between 80° and 160°C, preferably between 80 and 135°C; and
v) vaporizing said heated mixture comprising water and lignocellulosic biomass at an absolute pressure comprised between 0.5 and 25 kPa, and further **characterized in that** in said washing step a) said aqueous solution has a temperature comprised between 20° and 90°C, and the contact time of the biomass with the aqueous solution is comprised between 1 and 40 minutes.

3. The method according to claim 2, **characterized in that** in said washing step a) said aqueous solution has a temperature comprised between 30° and 60°C and the contact time of the biomass with the aqueous solution is comprised between 2 and 20 minutes.

4. The method according to any one of claims 1 to 3, **characterized in that** in said washing step b) said aqueous solution is selected from the group constituted by a solution of acetic acid at a concentration comprised between 10⁻⁶ and 10⁻¹ M and a solution of hydrochloric acid at a concentration comprised between 10⁻⁶ and 10⁻² M.

5. The method according to any one of claims 1 to 4, **characterized in that** in said washing step a), said aqueous solution is an ammonia solution at a concentration comprised between 0.01 and 0.1 M.

6. The method according to any one of claims 1 to 5, further comprising the steps of:
I) separating the desalinated lignocellulosic biomass from the aqueous solutions that are the result of the washing steps a) and b);
II) desiccating the desalinated lignocellulosic biomass obtained in step I) until a humidity rate of less than 10% by weight is obtained; and
III) pressing the desiccated lignocellulosic biomass obtained in step II) to form pellets.

7. The method according to claim 6, further comprising the steps of:
- separating and recycling the water from the aqueous solutions that are the result of the washing steps a) and b), obtaining a solid residue; and
- desiccating and subjecting the solid residue to granulation.

8. A desalinated lignocellulosic biomass obtainable by the method of any of the preceding claims comprising, on the dry residue:
- up to 2000 ppm of ash, as measured according to the UNI EN ISO 18122:2016 standard;
- up to 100 ppm of nitrogen, as measured according to the UNI EN ISO 16948:2015 standard;
- up to 50 ppm of sulfur, as measured according to the UNI EN ISO 16994:2017 standard; and
- up to 50 ppm of chlorine, as measured according to the UNI EN ISO 16994:2017 standard.

9. Use of a desalinated lignocellulosic biomass according to claim 8 as a biofuel.

## Patentansprüche

1. Ein Verfahren zur Entsalzungsbehandlung einer lignocellulosischen Biomasse, das die Schritte des Unterziehens einer zerkleinerten lignocellulosischen Biomasse gegenüber Folgendem umfasst:
a) einem Waschschritt, der eine wässrige Lösung mit einem pH zwischen 8 und 11,5, vorzugsweise zwischen 8,5 und 11, verwendet, bei einer Temperatur zwischen 15°C und 90°C, einem Druck zwischen 1 und 15 bar, vorzugsweise zwischen 1 und 8 bar, und einer Kontaktzeit zwischen 1 und 50 Minuten;
b) einem Waschschritt, der eine wässrige Lösung mit einem pH zwischen 3 und 6, vorzugsweise zwischen 4,5 und 5,5, verwendet, bei einer Temperatur zwischen 20° und 100°C, vorzugsweise zwischen 40 und 60°C, einem Druck zwischen 1 und 15 bar, vorzugsweise zwischen 1 und 8 bar, und einer Kontaktzeit zwischen 1 und 100 Minuten, vorzugsweise zwischen 3 und 30 Minuten; und
wobei der Waschschritt b) dem Waschschritt a) vorausgeht.

2. Das Verfahren gemäß Anspruch 1, **dadurch gekennzeichnet, dass** es vor den Waschschritten a) und b) folgende weitere Schritte umfasst:
i) Zerkleinern der lignocellulosischen Biomasse;
ii) Extrahieren der Luft aus der zerkleinerten lignocellulosischen Biomasse;
iii) Hinzufügen von Wasser zu der lignocellulosischen Biomasse, aus welcher die Luft extrahiert wurde, wodurch eine Mischung aus Wasser : lignocellulosischer Biomasse mit einem Gewichtsverhältnis Wasser : lignocellulosischer Biomasse von weniger als 2:1, vorzugsweise weniger als 1:1, gewonnen wird, wobei das Wasser vorzugsweise auf eine Temperatur von weniger als 120°C vorerhitzt wird;
iv) Erhitzen und Halten der Mischung aus Wasser : lignocellulosischer Biomasse bei einer Temperatur zwischen 80° und 160°C, vorzugsweise zwischen 80 und 135°C; und
v) Verdampfen der erhitzten Mischung, die Wasser und lignocellulosische Biomasse umfasst, bei einem absoluten Druck zwischen 0,5 und 25 kPa; und weiter **dadurch gekennzeichnet, dass** in dem Waschschritt a) die wässrige Lösung eine Temperatur zwischen 20° und 90°C hat und die Kontaktzeit der Biomasse mit der wässrigen Lösung zwischen 1 und 40 Minuten beträgt.

3. Das Verfahren gemäß Anspruch 2, **dadurch gekennzeichnet, dass** die wässrige Lösung in dem Waschschritt a) eine Temperatur zwischen 30° und 60°C hat und die Kontaktzeit der Biomasse mit der wässrigen Lösung zwischen 2 und 20 Minuten beträgt.

4. Das Verfahren gemäß einem beliebigen der Ansprüche 1 bis 3, **dadurch gekennzeichnet, dass** die wässrige Lösung in dem Waschschritt b) gewählt ist aus der Gruppe bestehend aus einer Lösung von Essigsäure mit einer Konzentration zwischen 10⁻⁶ und 10⁻¹ M und einer Lösung von Salzsäure mit einer Konzentration zwischen 10⁻⁶ und 10⁻² M.

5. Das Verfahren gemäß einem beliebigen der Ansprüche 1 bis 4, **dadurch gekennzeichnet, dass** in dem Waschschritt a) die wässrige Lösung eine Ammoniaklösung mit einer Konzentration zwischen 0,01 und 0,1 M ist.

6. Das Verfahren gemäß einem beliebigen der Ansprüche 1 bis 5, das weiter folgende Schritte umfasst:
I) Trennen der entsalzten lignocellulosischen Biomasse von den wässrigen Lösungen, die das Ergebnis der Waschschritte a) und b) sind;
II) Trocknen der entsalzten lignocellulosischen Biomasse, die in Schritt I) gewonnen wurde, bis ein Feuchtigkeitsgehalt von weniger als 10 Gewichtsprozent erzielt ist; und
III) Pressen der getrockneten lignocellulosischen Biomasse, die in Schritt II) gewonnen wurde, um Pellets zu formen.

7. Das Verfahren gemäß Anspruch 6, das weiter folgende Schritte umfasst:
- Abtrennen und Recyceln des Wassers von den wässrigen Lösungen, die das Ergebnis der Waschschritte a) und b) sind, wodurch ein fester Rückstand gewonnen wird; und
- Trocknen des festen Rückstands und Unterziehen desselben einer Granulierung.

8. Eine entsalzte lignocellulosische Biomasse, die hergestellt werden kann mit dem Verfahren gemäß einem beliebigen der obigen Ansprüche und auf dem trockenen Rückstand Folgendes umfasst:
- bis zu 2000 ppm Asche, gemessen nach der UNI EN ISO-18122:2016-Norm;
- bis zu 100 ppm Stickstoff, gemessen nach der UNI EN ISO 16948:2015-Norm;
- bis zu 50 ppm Schwefel, gemessen nach der UNI EN ISO 16994:2017-Norm; und
- bis zu 50 ppm Chlor, gemessen nach der UNI EN ISO 16994:2017-Norm.

9. Verwendung einer entsalzten lignocellulosischen Biomasse gemäß Anspruch 8 als Biotreibstoff.

## Revendications

1. Procédé pour le traitement de dessalement d'une biomasse lignocellulosique, qui comprend les étapes consistant à soumettre une biomasse lignocellulosique broyée à :
a) une étape de lavage à l'aide d'une solution aqueuse ayant un pH compris entre 8 et 11,5, de préférence entre 8,5 et 11, à une température comprise entre 15 °C et 90 °C, sous une pression comprise entre 1 et 15 bars, de préférence entre 1 et 8 bars, et pendant un temps de contact compris entre 1 et 50 minutes ;
b) une étape de lavage à l'aide d'une solution aqueuse ayant un pH compris entre 3 et 6, de préférence entre 4,5 et 5,5, à une température comprise entre 20 °C et 100 °C, de préférence entre 40 et 60 °C, sous une pression comprise entre 1 et 15 bars, de préférence entre 1 et 8 bars, et pendant un temps de contact compris entre 1 et 100 minutes, de préférence entre 3 et 30 minutes ; et
dans lequel ladite étape de lavage b) précède ladite étape de lavage a).

2. Procédé selon la revendication 1, **caractérisé en ce qu'**il comprend, avant les étapes de lavage a) et b), les étapes supplémentaires consistant à :
i) broyer la biomasse lignocellulosique ;
ii) extraire l'air de la biomasse lignocellulosique broyée ;
iii) ajouter de l'eau à la biomasse lignocellulosique de laquelle l'air a été extrait, pour obtenir un mélange d'eau:biomasse lignocellulosique ayant un rapport eau: biomasse lignocellulosique inférieur à 2:1 en poids, de préférence inférieur à 1:1 en poids, ladite eau étant de préférence préchauffée jusqu'à une température inférieure à 120 °C ;
iv) chauffer et maintenir le mélange d'eau:biomasse lignocellulosique à une température comprise entre 80° et 160 °C, de préférence entre 80 et 135 °C ; et
v) vaporiser ledit mélange chauffé comprenant de l'eau et de la biomasse lignocellulosique sous une pression absolue comprise entre 0,5 et 25 kPa, et en outre **caractérisé en ce que** dans ladite étape de lavage a) ladite solution aqueuse a une température comprise entre 20° et 90 °C, et le temps de contact de la biomasse avec la solution aqueuse est compris entre 1 et 40 minutes.

3. Procédé selon la revendication 2, **caractérisé en ce que** dans ladite étape de lavage a) ladite solution aqueuse a une température comprise entre 30° et 60 °C, et le temps de contact de la biomasse avec la solution aqueuse est compris entre 2 et 20 minutes.

4. Procédé selon l'une quelconque des revendications 1 à 3, **caractérisé en ce que** dans ladite étape de lavage b) ladite solution aqueuse est choisie dans l'ensemble constitué par une solution d'acide acétique à une concentration comprise entre 10⁻⁶ et 10⁻¹ M et une solution d'acide chlorhydrique à une concentration comprise entre 10⁻⁶ et 10⁻²M.

5. Procédé selon l'une quelconque des revendications 1 à 4, **caractérisé en ce que** dans ladite étape de lavage a) ladite solution aqueuse est une solution d'ammoniac à une concentration comprise entre 0,01 et 0,1 M.

6. Procédé selon l'une quelconque des revendications 1 à 5, comprenant en outre les étapes consistant à :
I) séparer la biomasse lignocellulosique dessalée d'avec les solutions aqueuses qui sont le résultat des étapes de lavage a) et b) ;
II) dessécher la biomasse lignocellulosique dessalée obtenue dans l'étape I) jusqu'à ce que soit obtenu un taux d'humidité de moins de 10 % en poids ; et
III) presser la biomasse lignocellulosique desséchée obtenue dans l'étape II), pour former des granulés.

7. Procédé selon la revendication 6, comprenant en outre les étapes consistant à :
- séparer et recycler l'eau à partir des solutions aqueuses qui sont le résultat des étapes de lavage a) et b), pour obtenir un résidu solide ; et
- dessécher le résidu solide et le soumettre à une granulation.

8. Biomasse lignocellulosique dessalée pouvant être obtenue par le procédé selon l'une quelconque des revendications précédentes, comprenant, sur le résidu sec :
- jusqu'à 2 000 ppm de cendre, telle que dosée selon la norme UNI EN ISO 18122:2016 ;
- jusqu'à 100 ppm d'azote, tel que dosé selon la norme UNI EN ISO 16948:2015 ;
- jusqu'à 50 ppm de soufre, tel que dosé selon la norme UNI EN ISO 16994:2017 ; et
- jusqu'à 50 ppm de chlore, tel que dosé selon la norme UNI EN ISO 16994:2017.

9. Utilisation d'une biomasse lignocellulosique dessalée, selon la revendication 8, en tant que biocarburant.
